# FASCICULE DE BREVET EUROPEEN

(11) **EP 2 047 653 B1**
(45) Date de publication et mention de la délivrance du brevet: **13.01.2010**
(21) Numéro de dépôt: 07787940.1
(22) Date de dépôt: 26.07.2007
(51) Int. Cl.: H04L 29/06

(54) **TRANSMISSION DE FLUX DE DONNEES EN FRAGMENTATION DES MESSAGES**
REKONFIGURIERBARES SIGNALVERARBEITUNGSVERFAHREN
TRANSMISSION OF DATA FLOWS IN FRAGMENTATION OF MESSAGES

(30) Priorité: 28.07.2006 FR 0606927
(43) Date de publication de la demande: 15.04.2009
(73) Titulaire: UDCAST, 06560 Valbonne (FR)
(72) Inventeur: OTTAVJ, Luc, 06560 Valbonne (FR); CLERGET, Antoine, 06250 Mougins (FR)
(74) Mandataire: Callon de Lamarck, Jean-Robert
(86) Numéro de dépôt international: PCT/EP2007/057718
(87) Numéro de publication internationale: WO 2008/012348

(56) Documents cités:
- EP-A1- 1 209 853
- US-A1- 2002 181 571
- GUNDLACH M ET AL: "Dynamic, power-aware scheduling for mobile clients using a transparent proxy" PARALLEL PROCESSING, 2004. ICPP 2004. INTERNATIONAL CONFERENCE ON MONTREAL, QC, CANADA 15-18 AUG. 2004, PISCATAWAY, NJ, USA,IEEE, 15 août 2004 (2004-08-15), pages 557-565, XP010718687 ISBN: 0-7695-2197-5
- HANZO L ET AL: "Burst-by-burst adaptive wideband wireless video telephony" COMMUNICATIONS AND VEHICULAR TECHNOLOGY, 2000. SCVT-200. SYMPOSIUM ON OCT 19, 2000, PISCATAWAY, NJ, USA,IEEE, 2000, pages 215-232, XP010542756 ISBN: 0-7803-6684-0

## Description

La présente invention est relative à une transmission de flux de données du type mettant en oeuvre un protocole à architecture en couches et une fragmentation des messages.

L'invention trouve en particulier avantageusement - mais non limitativement - application pour l'émission-réception de flux IP en téléphonie mobile, et notamment pour l'émission-réception de flux DVBH.

### Domaine technique général

Les échanges d'information dans l'Internet sont régis par des architectures en couches, par exemple du type de celles du modèle OSI (Open System Interconnection) de l'ISO (International Standard Organization).

Chaque couche y est caractérisée par un protocole définissant des règles d'échange de messages (encore appelées unités de données échangées ou PDU dans la suite du texte (en anglais « Protocol Data Units »)). Selon ce protocole, le PDU de la couche N (N-PDU) est composé d'un en-tête, d'un bloc d'informations et d'une fin. L'en-tête et la fin transportent les informations de service propres au protocole N, le bloc d'informations transportant en totalité ou en partie l'unité de données (PDU) de la couche N+1.

Les protocoles des couches basses, et en particulier celui de la couche liaison de données, impose de façon drastique une longueur maximum (MTU ou Maximum Transfer Unit) pour la longueur des trames, par exemple 1500 octets pour l'Ethernet. Or, cette longueur peut être inférieure à la longueur requise ou souhaitée pour les unités de données échangées (PDU) des couches supérieures. Par exemple, une application d'un serveur de fichiers réseau connecté sur un réseau Ethernet échangera au niveau « Application » des PDU (PDU applicatif ou APDU dans la suite du texte) de 8 kilo-octets ou plus, qui seront transportés au niveau « Réseau » (IP) dans des PDU réseau (datagrammes IP) de 1500 octets, eux-mêmes véhiculés dans des trames Ethernet de 1514 octets. Dans ce cas, le PDU applicatif sera fragmenté dans plusieurs PDU au niveau des datagrammes IP et des trames Ethernet.

### L'état technique

L'article de Grundlach et al. "Dynamic, power-aware scheduling for mobile clients using a transparent proxy" (Int. Conf. on Parallel Processing, Montréal, QC, Canada 15-08-2004) publié par IEEE (ISBN : 0-7695-2197-5) présente un procédé d'émission de flux de données comme résumé dans le préambule de la revendication 1.

### Présentation générale de l'invention

Un but de l'invention est d'optimiser cette fragmentation et de mettre en oeuvre un traitement de découpage et d'encapsulation des unités de données qui permette de faciliter la transmission des messages et d'éviter des temps de réception élevés.

Un autre but de l'invention est d'optimiser ce découpage et cette encapsulation pour limiter le temps pendant lequel les terminaux ont besoin d'être opérationnels, et ainsi économiser substantiellement leur batterie.

Il est notamment proposé dans le cas où la transmission s'opère par salves de mettre en oeuvre un traitement de constitu tion des salves qui tient compte du caractère homogène ou hétérogène des flux applicatifs.

En considérant en effet les flux applicatifs, on peut établir deux catégories :
- Les flux à importance homogène : dans de tels flux, toutes les informations contenues dans les APDU ont une importance égale, et les divers APDU ont une importance équivalente. Les flux délivrés par serveur de fichier réseau (unicast, multicast) en phase transfert de données entrent dans cette catégorie.
- Les flux à importance hétérogène : dans de tels flux, certaines informations sont plus importantes que d'autres. Par exemple les codages vidéo sont basés habituellement sur l'existence de trames principales (KeyFrames ou Iframes) contenant une image complète, qui sont suivies de trames secondaires (B frames) donnant uniquement les différences par rapport à cette trame principale.

Plus précisément, l'invention propose un procédé d'émission de flux de données pour une transmission selon un protocole à architecture en couches, selon lequel on fragmente les messages transmis en fonction de la longueur maximum imposée par les différentes couches, caractérisé en ce qu'on transmet les datagrammes par salves et en ce qu'on construit les salves en analysant et associant des datagrammes provenant de flux de différents types, de la façon suivante :
- on détermine pour les différents datagrammes le flux auquel il appartient et on caractérise l'homogénéité ou l'hétérogénéité de ce flux ;
- on encapsule dans une même salve des datagrammes correspondant à un même flux ;
   ■ lorsque ce flux est homogène, en commençant par un datagramme IP contenant le début d'un PDU applicatif, et en complétant par les datagrammes IP du même PDU applicatif ; ou
   ■ lorsque le flux est hétérogène, en commençant par un datagramme IP contenant une trame principale, et en complétant par un ou plusieurs datagrammes IP contenant des trames secondaires.

Une telle transmission par salves plutôt qu'en continu permet de tirer partie des débits importants qu'offrent généralement les canaux de transmission (par exemple, mais non limitativement en DVB), tandis que le remplissage des salves qui est proposé permet quant à lui d'éviter, au niveau de la réception, des temps d'accès trop importants à l'information.

L'invention concerne également un procédé de réception mettant en oeuvre un traitement inverse du procédé d'émission pour reconstituer les datagrammes, ainsi que des terminaux et un système de transmission mettant en oeuvre le procédé d'émission ou le procédé de réception.

### Présentation des figures

D'autres caractéristiques et avantages de l'invention ressortiront encore de la description qui suit, laquelle est purement illustrative et non limitative et doit être lue en regard des figures annexées sur lesquelles :
- la figure 1 illustre des terminaux d'émission et de réception mettant en oeuvre des procédés conformes à l'invention ;
- la figure 2 est un organigramme qui illustre différentes étapes d'un mode de mise en oeuvre de l'invention ;
- la figure 3 illustre des salves constituées selon un mode de mise en oeuvre de l'invention.

### Description d'un ou plusieurs modes de mise en oeuvre et de réalisation de l'invention

On se place, à titre d'illustration, dans la suite du texte dans le cas d'une transmission de télévision mobile, par exemple DVBH.

### Transmission par salves

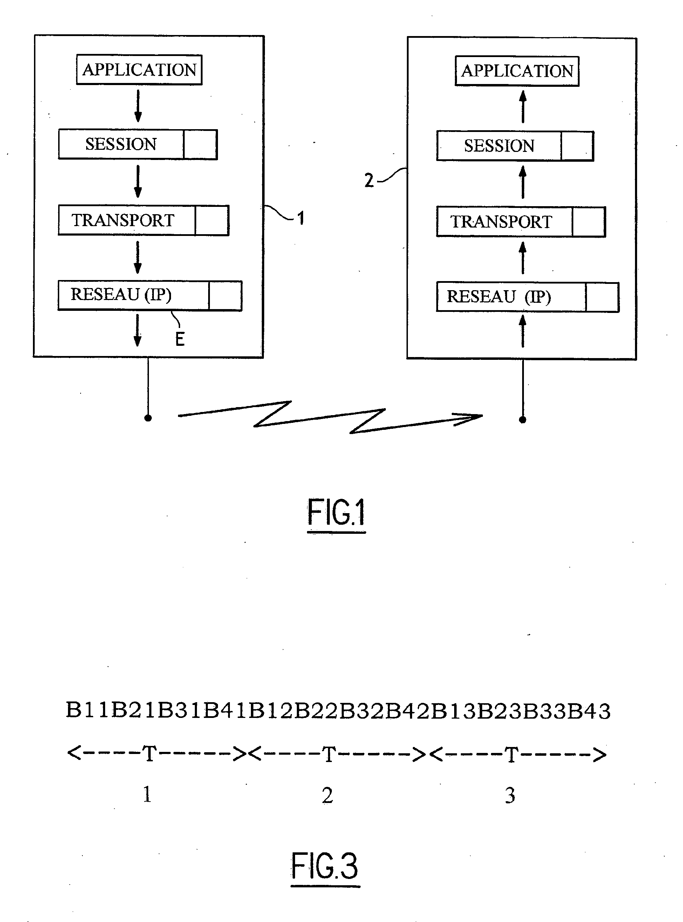

On a illustré schématiquement sur la figure 1 un émetteur 1 et un récepteur 2, qui échangent, ainsi que les différentes couches du protocole qu'ils mettent en oeuvre (couches d'applications et couches d'encapsulation : session, transport et réseau).

Le terminal émetteur 1 comprend notamment, au niveau de la couche « réseau IP » un encapsulateur E destiné à traiter les datagrammes IP.

Les datagrammes IP se présentent par exemple sous la forme de flux de différents types contenant différentes informations (flux multicast audio, vidéo, data).

Cet encapsulateur E encapsule les datagrammes IP et les diffuse dans le flux de sortie Mpeg2 DVB en mettant en oeuvre une transmission par salves (bursts).

Le canal de transmission DVB permet en effet un débit de quelques mégabits, alors que les flux à transmettre ont un débit de quelques centaines de kilobits.

Ainsi, plutôt que d'être transmis en continu, les flux sont transmis à la vitesse du canal pendant des temps très courts (par exemple 100 millisecondes) répétés avec une périodicité qui est par exemple d'une à plusieurs secondes.

De cette façon, un flux de débit moyen de 500 kilobits peut être transmis sans perte sur un canal de 10 mégabits par salves de 100 millisecondes répétées toutes les 2 secondes.

Un tel mécanisme permet au terminal de n'avoir son circuit radio opérationnel que pendant 95% de son temps, et donc d'économiser substantiellement sa batterie.

### Remplissage des salves

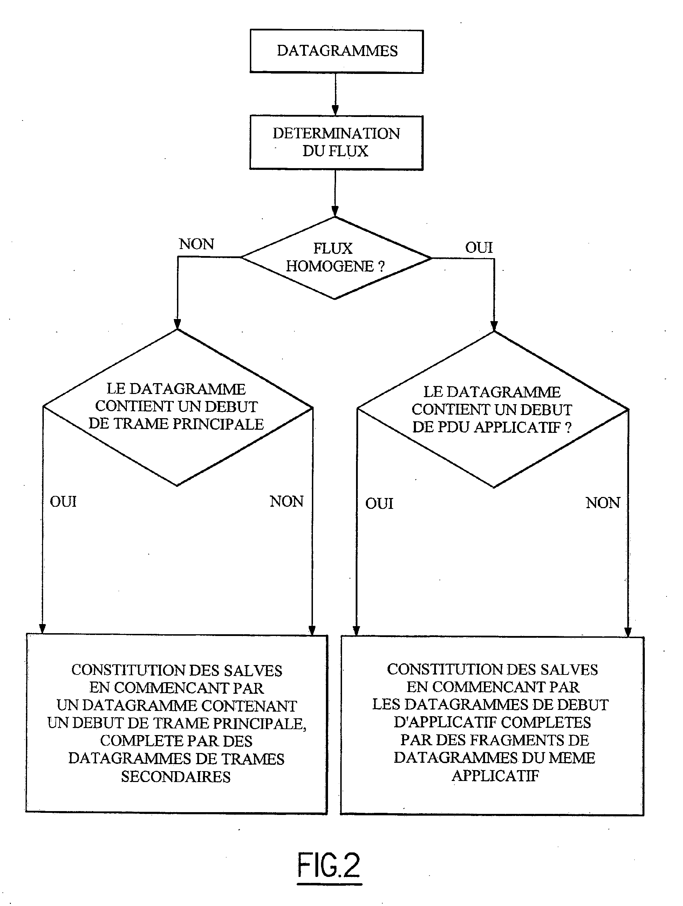

Le remplissage des salves qui est mis en oeuvre par l'encapsulateur E est illustré sur la figure 2 et permet d'optimiser les temps d'accès aux programmes, notamment lorsque l'utilisateur décide de changer de programme (« zapping »), ou encore d'optimiser l'efficacité des décrochages locaux ou l'efficacité des protocoles de transmission des données multicast.

A cet effet, l'encapsulateur E analyse les datagrammes IP qu'il reçoit et détermine pour chacun, d'eux : s'il appartient à un flux donné, pour chaque datagramme IP transportant un fragment de flux homogène, s'il contient ou non un début d'applicatif PDU, pour chaque datagramme IP transportant un fragment de flux hétérogène, s'il contient ou non un début de trame principale.

S'agissant des flux homogènes, l'encapsulateur E constitue les salves de façon homogène, en commençant par un datagramme IP contenant un début de PDU applicatif et en complétant la salve par le ou les datagrammes IP contenant d'autres fragments de ce PDU applicatif.

Ainsi, dans chaque salve, on intègre un nombre entier de PDU applicatifs, de sorte que le fonctionnement du récepteur n'est pas confronté à des temps de réception élevés pour les APDU.

S'agissant des flux hétérogènes, l'encapsulateur constitue les salves en commençant par un datagramme IP contenant un début de trame principale et en le complétant par une ou plusieurs autres trames secondaires jusqu'à la prochaine trame principale exclue. De cette façon, le temps de changement de programmes sera au maximum égal à l'intervalle de répétition de la salve (cas où la salve du programme d'arrivée est juste avant la salve du programme de départ). C'est ce qu'illustre la figure 3.

On se place en effet sur cette figure dans le cas où pendant l'intervalle T2, un terminal passe d'un programme 4 (B42) à un programme 3 (B33).

Dans cette hypothèse :
- Si B33 contient un groupe d'images (principales + secondaires), le terminal pourra afficher le nouveau programme de réception de B33 dans un temps inférieur à la période de répétition T, c'est-à-dire dans un temps en moyenne égal à T/2 ;
- Si, au contraire, B33 ne contient pas d'images principales ou un nombre insuffisant d'images secondaires, alors le terminal devra attendre (B34, B35 ...) de sorte que le temps de changement de programmes est alors supérieur à T et donc est plus élevé.

### Cas d'un trafic crypté

Ainsi que cela sera détaillé plus loin dans un exemple, pour mettre en oeuvre ce traitement, l'encapsulateur E peut par exemple analyser les informations contenues dans les entêtes des couches réseau (IP) ou Transport (TCP UDP), ou encore Session (RTP, SRTP) et Application.

Un cas particulier est toutefois celui d'un trafic crypté, où les champs d'en-tête à analyser sont a priori également cryptés.

Ainsi, si par exemple le trafic est crypté au niveau IP (IPSEC), seules les informations de l'entête IP sont en clair, et les informations des couches Transport, Session et Application sont rendues opaques à toute analyse ; si le trafic est par contre crypté au niveau Session (SRTP), ce sont alors les informations des couches Application qui sont inaccessibles.

Pour palier cet inconvénient, il est proposé un conditionnement de trafic qui analyse le trafic au niveau des diverses couches (Réseau, Transport, Session, Application) et marque en conséquence l'entête des datagrammes IP, en lui permettant d'être véhiculé en clair. De cette façon, l'analyse du trafic est possible même dans le cas le plus défavorable d'un trafic crypté au niveau IP.

Un encapsulateur en aval de ce traitement de conditionnement peut exploiter ces informations pour optimiser sa fonction de remplissage des salves.

Donc cette technique présente un double avantage :
- d'une part, permettre un travail d'optimisation dans un contexte d'échange crypté ; et
- d'autre part, alléger la complexité et la charge de travail de l'encapsulateur E qui manipule les indicateurs trouvés dans les entêtes IP et est dispensé d'un travail plus complexe d'analyse des flux au niveau des couches supérieures.

Cette fonction de conditionnement est mise en oeuvre alors que le trafic est en clair :
- dans le pire des cas, dans le serveur lui-même, ou ;
- dans un boîtier dédié placé avant tout dispositif d'encryptage ou de protection de contenu.

### Identificationlcaractérisation des flux

L'identification des flux est par exemple déterminée à partir de l'adresse IP source/destination port source/destination et éventuellement du champ SSRC (RFC3550) de l'entête RTP.

La qualification homogène/hétérogène du flux est obtenue par configuration par adresse IP et du port source/destination.

Les flux RTP sont caractérisés par leur adresse IP source/destination, adresse port source, adresse port destination et SSRC. Les adresses port source/destination et SSRC peuvent être rendues opaques par un cryptage en aval. On associe, pour chaque couple adresse IP source / adresse IP destination un numéro unique à chaque couple (adresse port source, adresse port destination, SSRC) sur n bits. Par exemple par addition des champs modulo nbits.

Cette information d'identification du flux pour un couple d'adresses IP transport source destination est transportée dans l'entête IP de la façon suivante :
- IP V4 : n premiers bits du champ « packet identifier » (le champ « packet identifier » devient hiérarchique, c'est-à-dire identificateur du flux datagramme) ;
- IP V6 : « flow identifier » qui est le champ prévu à cet effet par le protocole IP V6.

### Identification des datagrammes importants

- Dans le cas des trames principales des flux hétérogènes : déterminées par analyse du flux au niveau applicatif (Mpeg2, Mpeg4) dans le cas où le flux transporte du Mpeg4/RTP. On utilise à cet effet l'indicateur idoine : « Random Access Point Flag » dans l'entête de l'APDU Mpeg4 (RFC3640 RAP-flag). Quand il vaut 1, il indique que l'unité d'accès est associée à un point d'accès aléatoire au contenu du flux. Si l'unité d'accès est fragmentée, l'indicateur RAP-flag, s'il existe, doit être remis à zéro pour chaque fragment qui n'est pas le premier de l'unité applicative.
- Dans le cas de début APDU des flux homogènes : déterminé par analyse des entêtes des APDU.

Ces indications sur la présence d'informations importantes dans le fragment contenu dans la partie information du datagramme IP sont transportées dans l'entête du datagramme IP de la façon suivante :
- IP V4 : Dans le champ TOS DSCP par exemple utilisation des priorités (« drop precedence ») dans les classes « Assured Forwarding » (AF) par exemple utilisation de la classe « Assured Forwarding 1 » (AF1) et des codes DSCP = AF11 si le datagramme contient un début d'APDU d'un flux homogène ou le début de trame principale d'un flux hétérogène et DSCP = AF12 dans les cas contraires ;
- IP V6 : idem IP V4 et/ou option privée dans l'entête IP.

Avec les mécanismes décrits plus haut, l'encapsulateur, même dans un contexte de transmission cryptée, dispose en clair dans l'entête IP des champs lui permettant de déterminer les adresses source/destination, l'identificateur de flux ainsi que les codes DSCP.

Il utilise les adresses IP et éventuellement l'identificateur de flux pour déterminer la salve (burst) devant véhiculer le datagramme IP.

Il constitue ses salves en mettant en oeuvre les instructions logiques suivantes :

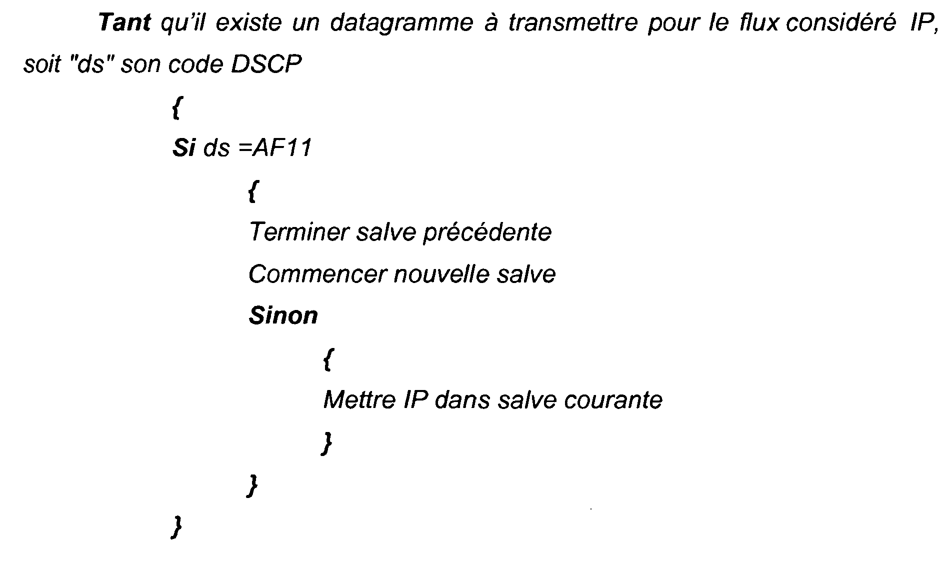

### Réception

Le terminal de réception 2 qui est illustré sur la figure 1 met en oeuvre quant à lui un procédé de traitement inverse de celui du terminal d'émission, de façon à reconstituer les datagrammes, puis l'ensemble des messages au niveau Application.

## Revendications

1. Procédé de transmission avec une partie d'émission de flux de données pour la transmission selon un protocole à architecture en couches (1, 2), selon lequel on fragmente les messages transmis en fonction de la longueur maximum imposée par les différentes couches, et selon lequel on transmet les datagrammes transportant des fragments par salves, avec les salves construites en analysant et associant des datagrammes provenant de flux de différents types, de la façon suivante :
- on détermine pour chacun des différents datagrammes le flux auquel il appartient et le caractère homogène ou l'hétérogène de ce flux ;
- on encapsule dans une même salve des datagrammes correspondant à un même flux et **caractérisé par** les étapes :
- en commençant, lorsque ce flux est homogène, par un datagramme IP contenant le début d'un PDU applicatif et en complétant par les datagrammes IP contenant les autres fragments du même PDU applicatif ; ou
- lorsque le flux est hétérogène, en commençant par un datagramme IP contenant une trame principale et en le complétant par un ou plusieurs datagrammes IP contenant des trames secondaires.

2. Procédé selon la revendication 1, **caractérisé en ce que**, pour déterminer le caractère homogène ou hétérogène d'un flux et analyser le contenu des fragments de datagrammes, on analyse les informations contenues dans les en-têtes des datagrammes au niveau d'au moins une couche de l'architecture.

3. Procédé selon la revendication 2, **caractérisé en ce que,** pour une transmission cryptée, on analyse les flux de données au niveau d'au moins une couche avant cryptage, et on marque en conséquence l'en-tête des datagrammes ; l'en-tête ainsi marquée étant ensuite véhiculée en clair et utilisée pour l'analyse du flux et des fragments de datagrammes qui permet la construction des salves.

4. Procédé selon l'une des revendications précédentes avec une partie de réception pour reconstituer les datagramme, mettant en oeuvre un procédé de traitement inverse au procédé d'émission.

5. Terminal émetteur, **caractérisé en ce qu'**il comporte un encapsulateur apte à mettre en oeuvre la construction de salves d'un procédé d'émission selon la revendication 1 ou la revendication 2.

6. Terminal émetteur selon la revendication 5, **caractérisé en ce qu'**il comporte en amont de l'encapsulateur des moyens pour mettre en oeuvre l'analyse des flux de données et le marquage d'un procédé d'émission selon la revendication 3.

7. Terminal récepteur, **caractérisé en ce qu'**il comporte des moyens pour mettre en oeuvre le procédé de réception selon la revendication 4.

8. Système de transmission comportant au moins un terminal émetteur selon l'une des revendications 5 ou 6 et au moins un terminal récepteur selon la revendication 7.

## Claims

1. A transmitting method comprising a data flow emitting part for transmission according to a layered architecture protocol (1, 2), according to which the transmitted messages are fragmented depending on the maximum length required by the different layers, and according to which the datagrams carrying fragments are transmitted in bursts, with the bursts being built by analyzing and associating datagrams from different flow types, as follows:
- for each of the different datagrams, the flow to which it belongs and the homogeneity or heterogeneity of this flow are determined;
- in one and the same burst, datagrams corresponding to one and the same flow are encapsulated,
**characterized by** the following steps:
- starting, if this flow is homogeneous, with an IP datagram containing the beginning of an application PDU, and stuffing with IP datagrams containing the other fragments of the same application PDU; or
- starting, if the flow is heterogeneous, with an IP datagram containing a main frame, and stuffing the same with one or more IP datagrams containing secondary frames.

2. The method according to claim 1, **characterized in that** for determining the homogeneity or heterogeneity of a flow and analyzing the contents of the datagram fragments, the information contained in the headers of the datagrams on at least one layer of the architecture is analyzed.

3. The method according to claim 2, **characterized in that** for an encrypted transmission, the data flows are analyzed on at least one layer before encryption, and the header of the datagrams is tagged accordingly; the header thus tagged is then conveyed without encryption and used for analyzing the flow and the datagram fragments, so that the bursts can be built.

4. The transmitting method according to any of the preceding claims, comprising a receiving part for restoring the datagrams, implementing a processing method being the reverse of the sending method.

5. An emitting terminal, **characterized in that** it comprises an encapsulator capable of implementing the step of building bursts from an emitting method according to claim 1 or claim 2.

6. The emitting terminal according to claim 5, **characterized in that**, upstream of the encapsulator, it comprises means for implementing the steps of analyzing the data flows and tagging from an emitting method according to claim 3.

7. A receiving terminal, **characterized in that** it comprises means for implementing the receiving method according to claim 4.

8. A transmitting system comprising at least one emitting terminal according to any of claims 5 or 6 and at least one receiving terminal according to claim 7.

## Patentansprüche

1. Übertragungsverfahren mit einem Datenfluss-Sendeteil zur Übertragung gemäß einem Schichtenarchitekturprotokoll (1, 2), wobei die übertragenen Nachrichten je nach der maximalen Länge, die von den verschiedenen Schichten verlangt werden, fragmentiert werden, und wobei die Fragmente transportierenden Datagramme in Salven übertragen werden, wobei die Salven durch Analysieren und Verknüpfen von Datagrammen aus verschiedenartigen Flüssen wie folgt aufgebaut werden:
- es wird für jedes der verschiedenen Datagramme der Fluss, zu dem es gehört, und die Homogeneität oder die Heterogeneität dieses Flusses bestimmt;
- in ein und derselben Salve werden Datagramme eingekapselt, die ein und demselben Fluss entsprechen,
**gekennzeichnet durch** folgende Schritte:
- wenn dieser Fluss homogen ist, Beginnen mit einem IP-Datagramm, das den Anfang einer Anwendungs-PDU enthält, und Auffüllen mit IP-Datagrammen, welche die anderen Fragmente derselben Anwendungs-PDU enthalten; oder
- wenn der Fluss heterogen ist, Beginnen mit einem IP-Datagramm, das einen Hauptrahmen enthält, und Auffüllen desselben mit einem oder mehreren IP-Datagrammen, die Nebenrahmen enthalten.

2. Verfahren nach Anspruch 1, **dadurch gekennzeichnet, dass** zum Bestimmen der Homogeneität oder Heterogeneität eines Flusses und zum Analysieren des Inhalts der Datagrammfragmente die Informationen, die in den Kopfzeilen der Datagramme enthalten sind, an mindestens einer Schicht der Architektur analysiert werden.

3. Verfahren nach Anspruch 2, **dadurch gekennzeichnet, dass** für eine verschlüsselte Übertragung, die Datenflüsse vor dem Verschlüsseln an mindestens einer Schicht analysiert werden und die Kopfzeile der Datengramme entsprechend markiert wird; wobei die derart markierte Kopfzeile dann unverschlüsselt übertragen und zum Analysieren des Flusses und der Datagrammfragmente verwendet wird, was den Aufbau der Salven ermöglicht.

4. Übertragungsverfahren nach einem der vorhergehenden Ansprüche mit einem Empfangsteil zum Wiederherstellen der Datagramme, der ein Verarbeitungsverfahren einsetzt, das umgekehrt zu dem Sendeverfahren ist.

5. Sendeterminal, **dadurch gekennzeichnet, dass** es eine Eirikapselungsvorrichtung umfasst, die in der Lage ist, den Aufbau von Salven eines Sendeverfahrens nach Anspruch 1 oder 2 umzusetzen.

6. Sendeterminal nach Anspruch 5, **dadurch gekennzeichnet, dass** es oberhalb der Einkapselungsvorrichtung Mittel umfasst, um die Analyse der Datenflüsse und die Markierung aus einem Sendeverfahren nach Anspruch 3 umzusetzen.

7. Empfangsterminal, **dadurch gekennzeichnet, dass** es Mittel umfasst, um das Empfangsverfahren nach Anspruch 4 umzusetzen.

8. Übertragungssystem, umfassend mindestens ein Sendeterminal nach einem der Ansprüche 5 oder 6 und mindestens ein Empfangsterminal nach Anspruch 7.
